Europäisches Patentamt

European Patent Office

Office européen des brevets

(11) Publication number: **0 350 094**
**A1**

(12) # EUROPEAN PATENT APPLICATION

(21) Application number: 89201667.6

(22) Date of filing: 22.06.89

(51) Int. Cl.⁴: **G09B 9/00**

(30) Priority: 06.07.88 NL 8801706

(43) Date of publication of application:
**10.01.90 Bulletin 90/02**

(84) Designated Contracting States:
**AT BE CH DE ES FR GB GR IT LI LU NL SE**

(71) Applicant: CCM BEHEER B.V.
7, Duivendijk
NL-5672 AD Nuenen(NL)

(72) Inventor: Willemsen, Henricus Petrus
72, Lieshoutseweg
NL-5735 RD Aarle-Rixtel(NL)
Inventor: Janssen, Joseph Johannes Jacobus
27, Lariksbeek
NL-5501 GR Veldhoven(NL)

(74) Representative: Timmers, Cornelis Herman
Johannes et al
EXTERPATENT P.O. Box 90649
NL-2509 LP 's-Gravenhage(NL)

(54) Device for the simulation of a state of microgravity.

(57) Device for the simulation of a state of microgravity, comprising a container (8a, 8b) guided along an essentially vertical guide (2) and a spring (22) for absorbing the kinetic energy of the container at the end of the downward movement thereof, said spring (22) setting with its bottom end on a mass (16) which is connected to the moving part (30) of an electromagnetic drive unit (32).

## Device for the simulation of a state of microgravity.

The invention relates to a device according to the preamble of claim 1.

Such a device is described in EP-AI-0 292 379. In this described device the spherical container is ejected from and caught in a bowl-shaped carrier; the acceleration in the vertical direction must be achieved by pulsating air surges or by an electromagnetic drive unit.

With the embodiments described, a high ratio between the periods of weightlessness and acceleration (from 1:50 to 1:100) cannot be obtained, and the object of the invention is to eliminate this disadvantage.

This object is achieved with the measures described in the characterizing clause of the main claim.

The guide ensures that the container at the bottom end of its path always surely lands at the same point, namely at the top end of the spring. This spring is then compressed until the speed of the container has decreased to zero, the kinetic energy of the container being absorbed in the spring and converted into potential energy; this potential energy is then released to the container which is accelerated in the upward direction, during which, of course, energy must be supplied from the outside too, due to the losses occurring.

With a certain mass of the container the ration between the free fall time and the acceleration time is determined by the stiffness of the spring, which must therefore be as great as possible. Here, however, problems arise during the necessary infeed of energy to the spring: the maximum force to be exerted on the spring increases while the time available for the exertion of the force decreases. The drive unit must therefore meet high standards.

The mass used according to the invention and on which the spring rests can, however, store sufficient energy and, through a suitable control of the electromagnetic drive element, it can be ensured that the moment the spring is compressed by the container falling on it the mass already has enough upward vertical speed to accelerate the container upwards in the desired way. The drive unit needs only have a low power.

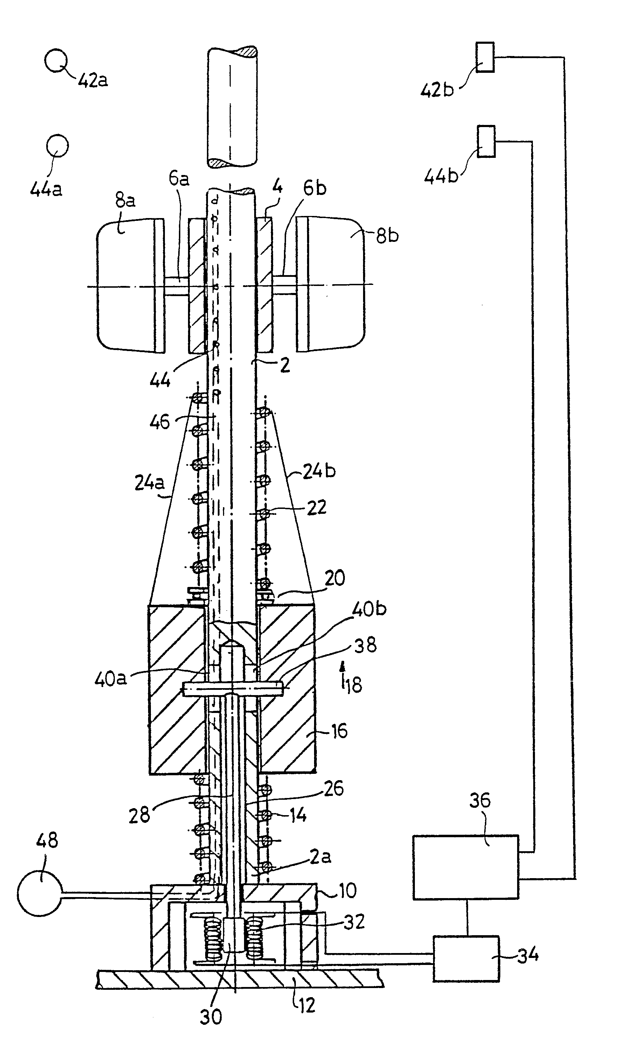

It is observed that the use of an electromagnetic drive in conjunction with a spring is already shown in figure 2 of EP-AI-0 292 379, but not in the way proposed according to the present application: according to said publication, not only a cup-shaped carrier for catching the container, but also the bar-shaped armature of the electromagnetic drive unit, is connected to the top end of the spring. This makes it impossible to obtain with such an arrangement the advantages achieved with the invention: a high ratio between the periods of weightlessness and acceleration.

Preferred embodiments of the invention are described in the sub-claims.

The invention is explained with reference to the drawing. This shows schematically and in longitudinal section a preferred embodiment of the invention.

In the figure reference number 2 indicates an elongated cylindrical guide bar around which the cylindrical sleeve 4 bearing two compartments 8a, 8b by means of two bearing supports 6a, 6b, radially projecting therefrom, can move freely. These compartments serve to accomodate the organisms to be subjected to a state of microgravity.

The bar 2 rests with the bottom end 2a on a frame 10 which rests on the base 12. As seen from the bottom upwards, the following elements are disposed around the bar 2:

A first spring 14 which rests with its bottom end on the frame 10, and on the top end of which rests a mass 16 which can move over a certain stroke along the bar 2.

At the top end of the mass 18 there is an axial bearing 20 on which the bottom end of the second spring 22 rests. In a preferred embodiment one or more elastic elements 24a, 24b run from the top end of said spring 22 to the top side of the weight 16, in such a way that the spring 22 is not impeded in its movement in the lengthwise direction of the guide bar 2 and always remains in contact with the bearing 20.

In the bottom end 2a of the guide bar 2 is formed the lengthwise bore 26, through which passes a drive rod 28 which at the bottom end is connected to the armature 30 of a schematically shown electromagnet winding 32, which is connected to the electrical energizing source 34; the latter is controlled by the schematically shown control device 36. At the top end the rod 28 carries a transverse rod 38 which passes through slotted holes 40a, 40b, and the ends of which are fixed in the mass 16.

Of course, only part of the guide bar 2 is shown in the figures; in a practical embodiment this bar is about 1,5 metres high.

Along the guide bar are fitted photoelectric detection means, comprising the light source 42a with photodetector 42b and the light source 44a with photodetector 44b, of which the output signals are fed to the control device 36 in the manner described in EP-AI-0 292 379 (which is included herein by reference); the passing of the containers 8a, 8b is detected by these means and, depending thereon, the electomagnetic energation device 34 is controlled by means of the control device 36.

The spring 14 is dimensioned in such a way that said spring can bear the weight of the mass 16, so that the armature 30 is in rest at the optimum place within the winding 32; this winding therefore need not be energized continuously with a direct current component; a pulsating energation, solely for driving the mass, is sufficient.

In the operation of the device, pulsating energation of the winding 32 with current pulses of suitable amplitude, duration and repetition frequency, the mass 16 is moved periodically upwards in the direction of the arrow 18, when the containers 8a, 8b have virtually reached the end of their downward path. When the bearing and guide sleeve 4 touches the top end of the spring 22, said spring is compressed, and the kinetic energy of the moving part comprising the containers 8a, 8b, the bearing supports 6a, 6b and the sleeve 8, is thus used for compression of the spring 22, which expands again when the moving unit has come to a standstill, and accelerates this unit in an upward direction. Since, of course, energy is always lost, additional energy must be supplied and it is supplied by the mass 18 which is set in motion by means of the electromagnetic energation device in the direction of the arrow 18. It was found possible, making use of the signals supplied by the detection means to energize the winding 32 by means of the control device 36 in such a way that the desired effect (acceleration of the containers 8a, 8b along the guide 2 at high repetition frequency) is achieved.

It was found that the spring 2 is fixed to the mass 16, the sleeve 4 not only has a movement in the vertical direction communicated to it, but is also given a slow rotation round the guide 2. If this is considered undesirable, the spring 2 is not connected directly to the mass 16, but rests thereon as shown, via the axial bearing 20 permitting a free rotation of the spring 22. The elastic elements 24a, 24b already mentioned are provided in order to keep the spring constantly in contact with the bearing 22 here.

Of course, many modifications are possible within the scope of the invention, in particular as regards the form of the first or second spring 22 or 14, or the design of the electromagnetic energizing element, and the guide 2. The latter can, for example, be provided with air outflow apertures 44 which open out into the outer surface thereof, and which are connected by means of a common air supply duct 46 to a source of compressed air 48, such as shown schematically in the drawing.

## Claims

1. Device for the simulation of a state of microgravity, comprising a container, an element for repeated acceleration of said container in an essentially vertical direction, and a spring for absorbing the kinetic energy of the container at the end of the downward movement thereof, characterized in that the container (8a, 8b) is guided along an elongated guide (2), and the spring (22) rests with its bottom end on a mass (16) which is connected to the moving part (30) of an electromagnetic drive unit (32).

2. Device according to claim 1, characterized in that the mass (16) is supported by means of a second spring (14) taking the weight thereof.

3. Device according to claim 2, characterized in that the two springs (22, 14) and the mass (16) are disposed round the guide (2).

4. Device according to claims 1-3, characterized in that the container is made up of at least two compartments (8a, 8b) disposed symmetrically relative to the guide.

5. Device according to claims 3-4, characterized in that the guide (2) comprises along a part of the bottom end (2a) thereof a bore (26) running in the lengthwise direction to take a drive rod (28) which carries at its top end a transverse bar (38) which passes through two slotted holes (40a, 40b) opening out into this bore, and the ends of which are connected to the weight (16), and which is connected at the bottom end to an armature (30) accomodated in an energizing winding (32).

6. Device according to claims 3-5, characterized in that the bottom end of the first spring (22) is supported on the mass (16) by means of an axial bearing (20) permitting rotation of the spring.

7. Device according to claim 6, characterized in that the top end of the first spring (22) is connected by means of elastic elements (24a, 24b) to the mass (16).

8. Device according to claims 1-7, characterized in that a number of air outflow apertures connected to a source of compressed air open out into the outer surface of the guide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,E | EP-A-0 292 379 (AGENCE SPATIALE EUROPEENE) * Whole document * | 1 | G 09 B 9/00 |
| A | US-A-3 479 883 (G. COOPER) * Column 2, lines 60-72; column 2, lines 1-29; figures * | 1 | |
| A | DE-A-3 320 262 (O.H.B. GmbH) * Whole document * | 1 | |

TECHNICAL FIELDS SEARCHED (Int. Cl.5)

G 09 B
B 64 G

The present search report has been drawn up for all claims

| Place of search | Date of completion of the search | Examiner |
|---|---|---|
| THE HAGUE | 02-10-1989 | GORUN M. |

EPO FORM 1503 03.82 (P0401)